Europäisches Patentamt

European Patent Office

Office européen des brevets

(11) Publication number: **0 310 084 B1**

## EUROPEAN PATENT SPECIFICATION

(45) Date of publication of patent specification: **15.04.92**  (51) Int. Cl.⁵: **B60K 15/04**

(21) Application number: **88116115.2**

(22) Date of filing: **29.09.88**

(54) Device for the connection and closure of a motor vehicle fuel filler.

(30) Priority: **01.10.87 IT 5369387 U**

(43) Date of publication of application:
**05.04.89 Bulletin 89/14**

(45) Publication of the grant of the patent:
**15.04.92 Bulletin 92/16**

(84) Designated Contracting States:
**DE ES FR GB SE**

(56) References cited:
**DE-A- 2 922 611**
**FR-A- 2 435 367**

(73) Proprietor: **FIAT AUTO S.p.A.**
**Corso Giovanni Agnelli 200**
**I-10135 Torino(IT)**

(72) Inventor: **Comoli, Elio**
**Via Frejus, 48**
**I-10100 Torino(IT)**

(74) Representative: **Boggio, Luigi et al**
**STUDIO TORTA Società Semplice Via Viotti, 9**
**I-10121 Torino(IT)**

Rank Xerox (UK) Business Services

# Description

The present invention relates to a device for the connection and closure of a motor vehicle fuel filler, which device is designed to prevent oxidation of the bodywork in the vicinity of the filler, and to enable fast, troublefree assembly to the vehicle body.

Fillers of the aforementioned type are known from FR-A-2 435 367 to comprise an end flange which is connected, usually welded, to the vehicle body with a tubular fitting inbetween. The body panel is also fitted with a lid for closing the cavity inside the said fitting, and which is also usually assembled by welding a hinge to the body panel, between this and the lid itself.

Fillers of the aforementioned type present a number of major drawbacks: rapid oxidation due to welding of the aforementioned parts; assembly difficulties due to limited access to the body parts involved; and, finally, the formation of a cumbersome assembly inside the vehicle bodywork.

The aim of the present invention is to provide a device for the connection and closure of a motor vehicle fuel filler, designed to overcome the aforementioned draw-backs, i.e. a device designed to prevent oxidation of the bodywork in the vicinity of the filler, and which is both compact and quick and easy to assemble. With this aim in view, according to the present invention, there is provided a device for the connection and closure of a motor vehicle fuel filler as defined in Claim 1.

One embodiment of the present invention will be described with reference to the accompanying drawings, in which:

Fig.1 shows a vertical section of the device according to the present invention;

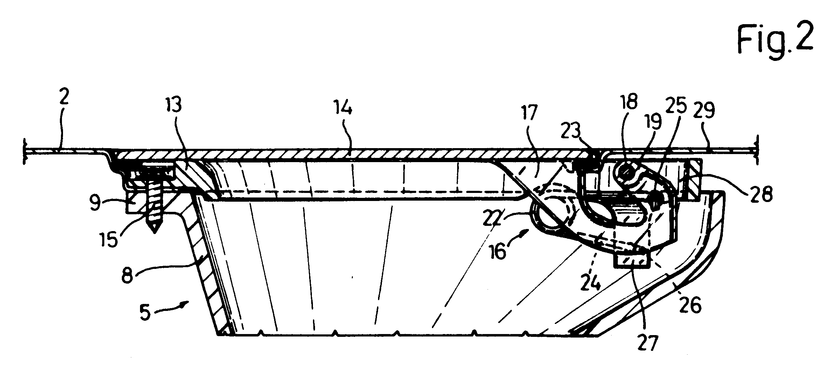

Fig.2 shows a section of the Fig.1 device in the closed position, and perpendicular to the Fig.1 section;

Fig.3 shows a section of the Fig.2 device in the open position.

The device according to the present invention provides for connecting a fuel filler 1 to the body panel 2 of a motor vehicle, said filler substantially comprising an end flange 3 and a cap 4. The device according to the present invention comprises a hollow body 5 having a bottom wall 6 in which is formed an opening housing the end of filler 1. Said end flange conveniently presents an annular groove 7 into which the edge of wall 6 is fitted. Hollow body 5 comprises a side wall 8, the end edge 9 of which is conveniently flange-shaped and connected to body panel 2.

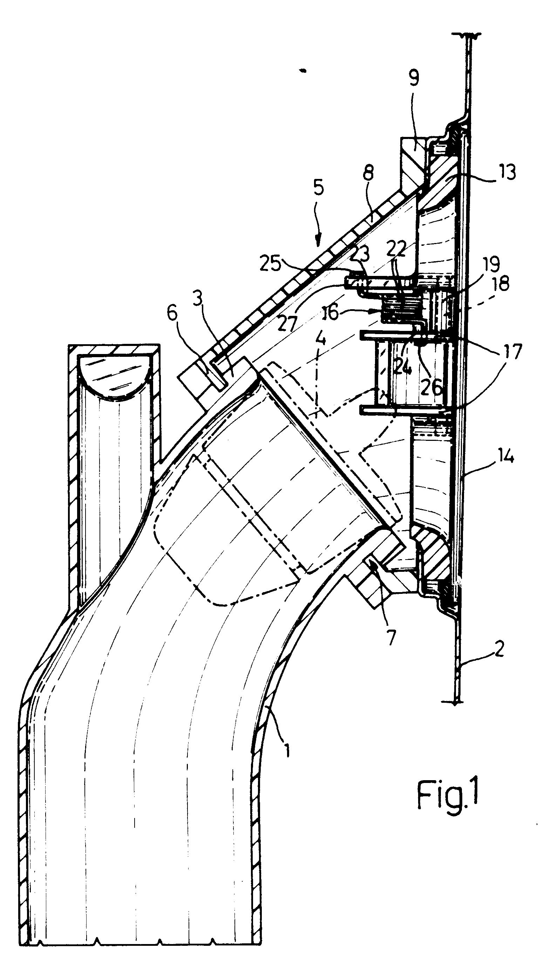

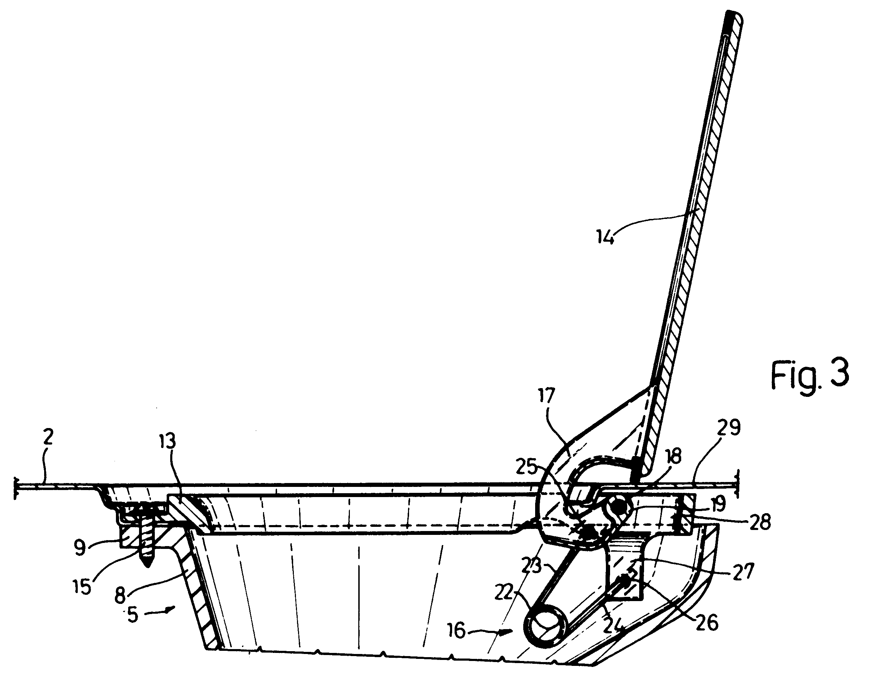

The device according to the present invention also comprises a supporting frame 13 connected to body panel 2 and to which is hinged a lid 14. As shown clearly in the accompanying drawings, flange 9 and frame 13 conveniently rest on the inner and outer surfaces respectively of panel 2, to which both are fitted by means of screws 15 (Fig.3). The device according to the present invention comprises at least one spring 16 for securing lid 14 in both the closed position shown in Fig.s 1 and 2 and the open position shown in Fig.3. Lid 14 conveniently presents a substantially C-shaped supporting shank 17 (Fig.s 2 and 3) projecting from the inner surface of lid 14. The end of said shank 17 presents a hole fitted through with a pin 18 inserted inside a respective seat formed, for example, inside an enlargement 19 (Fig.1) on frame 13.

Spring 16 conveniently comprises one or more coils 22 from which project a pair of arms 23 and 24. Arm 23 is connected in a first location 25 close to the end of shank 17, and arm 24 in a second location 26 close to the end of a projection 27 on frame 13. Said spring 16 is assembled slightly preloaded, and locations 25 and 26 selected to ensure said lid 14 is secured in both the closed and open positions shown respectively in Fig.s 2 and 3. Pin 18 is conveniently housed inside an appendix 28 projecting laterally in relation to frame 13, as shown clearly in Fig.s 2 and 3, and therefore located behind and fully concealed by a portion 29 of body panel 2. Hollow body 5, frame 13 and lid 14 are preferably formed from plastic.

The device according to the present invention is assembled quickly and easily by first mounting the assembly comprising frame 13, lid 14 and spring 16. As this is done on the workbench, said parts may be assembled quickly and accurately. Filler 1, to which hollow body 5 has already been fitted by inserting edge 6 inside annular groove 7, is then fitted to body panel 2 by simply placing edge 9 on the inner surface of panel 2 and securing it to the same, together with frame 13, by means of screws 15. Frame 13 is positioned as shown in the accompanying drawings by first inserting appendix 28 underneath portion 29 of body panel 2, by which said appendix 28 is fully concealed when assembled. Spring 16 normally secures lid 14 in the closed position shown in Fig.s 1 and 2. By virtue of the preload on spring 16 and the assembly locations 25 and 26 of arms 23 and 24, spring 16 provides for securing lid 14 in both the closed position against body panel 2, and in the fully-open position shown in Fig.3.

Clearly, the material from which the component parts of the device are formed, and the manner in which the same are fitted to body panel 2, prevent any possibility of oxidation, rusting, or local damage to the vehicle body. Also, the design of the component parts of the device, and the manner in which they are assembled, provide for a compact assembly, particularly on the inside of the vehicle body.

To those skilled in the art it will be clear that changes may be made to both the design and arrangement of the component parts of the device as described and illustrated herein without, however, departing from the scope of the present invention.

## Claims

1. A device for the connection and closure of a motor vehicle fuel filler (1) comprising an end flange (3) connected to a vehicle body panel (2); a cap (4); a hollow body (5) having a bottom wall connected to said flange (3) and provided with an opening housing the end of said filler, and a side wall (8) the end edge (9) of which is connected to said body panel inner surface; a supporting framed (13) also connected to said body panel (2) and carrying a lid (14) hinged thereto; and at least one spring (16) designed for securing said lid (14) in a first, closed, position wherein the lid substantially rests on said frame and in a second, open, position wherein the opening defined inside the frame is left exposed; **characterized** in that said hollow body (5), said frame (13) and said lid (14) are made of synthetic plastic material, and that said frame (13) rests on the outer surface of said body panel (2).

2. A device as claimed in claim 1, characterized in that said flange (3) of said filler presents an annular groove (7) in which the edge of said opening in the bottom wall (6) of said hollow body (5) is inserted.

3. A device as claimed in claim 1 or 2, characterized in that said lid (14) presents a substantially C-shaped supporting shank (17) projecting from the inner surface of the lid inside said frame (13); the end of said shank (17) having a hole fitted through with, a hinge pin (18) inserted inside a respective seat (19) on said frame (13).

4. A device as claimed in Claim 3, characterized in that said spring (16) comprises a pair of arms (23,24), a first of which (23) is connected in a first location (25) close to the end of said shank (17) and a second of which is connected in a second location (26) close to the end of a projection, (27) on said frame (13); said spring (16) being assembled slightly pre-loaded, and said locations (25,26) being selected to ensure said spring (16) secures said lid (14) in both the open and closed positions.

5. A device as claimed in claim 4, characterized in that said hinge pin (18) of said shank (17) is supported by an appendix (28) projecting laterally from said frame (13); said appendix (28) being concealed by a portion (29) of said body panel (2).

## Revendications

1. Dispositif pour le raccordement et la fermeture d'un orifice (1) de remplissage de carburant d'un véhicule automobile, comprenant une bride d'extrémité (3) raccordée à un panneau (2) de la carrosserie du véhicule; un capuchon (4); un corps creux (5) possédant une paroi de fond raccordée à ladite bride (3) et comportant une ouverture logeant l'extremité dudit dispositif de remplissage, et une paroi latérale (8), dont le bord d'extrémité (9) est raccordée à ladite surface intérieure du panneau de la carrosserie; un cadre de support (13) également raccordé audit panneau (2) de la carrosserie et sur lequel est articulé un couvercle (14); et au moins un ressort (16) agencé de manière à retenir ledit couvercle (14) dans une première position, fermée, dans laquelle le couvercle est sensiblement en appui sur ledit cadre, et dans une seconde position, ouverte, dans laquelle l'ouverture définie à l'intérieur du cadre reste dégagée; caractérisé en ce que ledit corps creux (5), ledit cadre (13) et ledit couvercle (14) sont réalisés en une matière plastique synthétique et que ledit cadre (13) est en appui sur la surface extérieure dudit panneau (2) de la carrosserie.

2. Dispositif selon la revendication 1, caractérisé en ce que ladite bride (3) dudit dispositif de remplissage possède une gorge annulaire (7), dans laquelle est inséré le bord de ladite ouverture ménagée dans la paroi de fond (6) dudit corps creux (5).

3. Dispositif selon la revendication 1 ou 2, caractérisé en ce que ledit couvercle (14) possède un bras de support (17) sensiblement en forme de C, qui fait saillie à partir de la surface intérieure du couvercle à l'intérieur dudit cadre (13); l'extrémité dudit bras (17) comportant un trou dans lequel est insérée un axe d'articulation (18) introduit à l'intérieur d'un siège respectif (19) présent sur ledit cadre (13).

4. Dispositif selon la revendication 3, caractérisé en ce que ledit ressort (16) comprend un couple de bras (23,24), dont un premier (23) est raccordé, en un premier emplacement (25) proche de l'extrémité dudit bras (17), et dont le second est raccordé en un second emplacement (26) proche de l'extrémité d'une partie saillante (27) située sur ledit cadre (13); ledit ressort (16) étant assemblé en étant légèrement précontraint, et lesdits emplacements (25,26) étant choisis de manière que ledit ressort (16) bloque de façon sûre ledit couvercle (14) à la fois dans la position ouverte et dans la position fermée.

5. Dispositif selon la revendication 4, caractérisé en ce que ledit axe de charnière (18) dudit bras (17) est supporté par un appendice (28) qui fait saillie latéralement par rapport audit cadre (13); ledit appendice (28) étant masqué par une partie (29) dudit panneau (2) de la carrosserie.

## Patentansprüche

1. Vorrichtung zum Befestigen und Verschließen eines Kraftfahrzeug-Tankstutzens (1) mit
   - einem End-Flansch (3), befestigt an einem Karosserieteil (2);
   - einer Kappe (4);
   - einem Hohlkörper (5) mit einer Bodenwand, die an dem Flansch (3) befestigt ist, und die mit einer Öffnung versehen ist, die das Ende des Tankstutzens aufnimmt, und mit einer Seitenwand (8), deren Abschlußkante (9) mit der inneren Oberfläche des Karosserieteils (2) verbunden ist; mit
   - einem Trägerrahmen (13), der ebenfalls mit dem Karosserieteil (2) verbunden ist, und der eine daran angelenkte Klappe (14) trägt; und mit
   - zumindest einer Feder (16), die zum Sichern der Klappe (14) in einer ersten geschlossenen Position, in der die Klappe im wesentlichen auf dem Rahmen ruht, und in einer zweiten, geöffneten Position,in der die im Inneren des Rahmens begrenzte Öffnung zugänglich ist, vorgesehen ist;

   dadurch gekennzeichnet, daß der Hohlkörper (5), der Rahmen (13) und die Klappe (14) aus synthetischem Plastikmaterial gefertigt sind, und daß der Rahmen (13) auf der äußeren Oberfläche des Karosserieteils (2) ruht.

2. Vorrichtung nach Anspruch 1, dadurch gekennzeichnet, daß der Flansch (3) des Tankstutzens eine ringförmige Nut (7) aufweist, in der die Abschlußkante der Öffnung in der Bodenwand (6) des Hohlkörpers (5) eingesetzt ist.

3. Vorrichtung nach Anspruch 1 oder 2, dadurch gekennzeichnet, daß die Klappe (14) einen im wesentlichen C-förmigen Hebel (17) aufweist, der von der inneren Oberfläche der Klappe in den Rahmen hinein vorsteht, wobei das Ende des Hebels (17) ein Loch aufweist, durch das ein Scharnierbolzen (18) geführt ist, der in eine entsprechende Aufnahme (19) am Rahmen (13) eingepaßt ist.

4. Vorrichtung nach Anspruch 3, dadurch gekennzeichnet, daß die Feder (16) ein Paar Arme (23, 24) aufweist, deren erster (23) an einer ersten Stelle (25) nahe dem Ende des Hebels (17) befestigt ist, und deren zweiter an einer zweiten Stelle (26) nahe dem Ende eines Vorsprungs (27) auf dem Rahmen (13) befestigt ist, wobei die Feder (16) leicht vorgespannt eingebaut wird, und wobei die Stellen (25, 26) so gewählt sind, daß die Feder (16) die Klappe (14) sowohl in der geöffneten als auch in der geschlossenen Position sichert.

5. Vorrichtung nach Anspruch 4, dadurch gekennzeichnet, daß der Scharnierbolzen (18) des Hebels (17) durch einen Fortsatz (28), der seitlich aus dem Rahmen (13) hervorragt, abgestützt wird, wobei der Fortsatz (28) durch einen Abschnitt (29) des Karosserieteils (2) verdeckt wird.

Fig.1

Fig.2

Fig. 3